# EUROPEAN PATENT APPLICATION

(11) **EP 4 162 787 A1**
(43) Date of publication of application: **12.04.2023**
(21) Application number: 22195119.7
(22) Date of filing: 12.09.2022
(51) Int. Cl.: A01D 34/66, A01B 69/00, A01D 34/86

(54) **IMPLEMENT CONTROL AND CORRESPONDING METHOD**

(30) Priority: 08.10.2021 GB 202114447
(71) Applicant: AGCO International GmbH, 8212 Neuhausen am Rheinfall (CH)
(72) Inventor: KINAST, Ronnie, 90537 Feucht (DE)
(74) Representative: AGCO Intellectual Property Department

(57) **Abstract**

Systems and methods are provided for controlling operation of an agricultural vehicle-implement combination. An orientation of the vehicle, the implement and/or the vehicle-implement combination is used to determine whether an adjustment in a lateral position of the implement is required. An actuator mechanism is provided for controlling the lateral position of the implement in accordance with any determined adjustment.

## Description

### CROSS-REFERENCE TO RELATED APPLICATIONS

Not applicable.

### FIELD

Embodiments of the present disclosure relate generally to controlling operation of implements for agricultural machinery, and in particular for controlling operation of implements for mowing and the like.

### BACKGROUND

It is known to mount or otherwise couple implements, and specifically mowing implements to agricultural vehicles such as tractors. Such implements may be front mounted or may be towed by the vehicle. In some arrangements, a vehicle/tractor may have a front mowing unit mounted to the front of the vehicle/tractor, and one or more rear mowing units towed by the vehicle/tractor. The front and rear mowing units may be mounted or otherwise coupled to the vehicle/tractor and be positioned in a complementary fashion to increase the working area of the arrangement. For example, the rear mowing unit(s) may be laterally spaced from the machine to increase the width of the working area of the arrangement.

Problems arise where the arrangement is not travelling directly forwards along a straight path. When turning, the working areas of the front and rear mowing units may overlap, reducing the efficiency of the operation by effectively reducing the overall working area of the arrangement. At some increased steering angles, the relative positions of the front and rear mowing units may be such that a non-mowed strip remains on the inside of the turn.

To overcome such issues, solutions have been provided with increased overlap in the working areas of the front and rear mowing units. However, as discussed herein this reduces the efficiency of the arrangement. An alternative solution includes providing moveable rear mowing unit(s) however such solutions have been found to be complex and expensive. Manually adjusting the lateral position of the front mowing unit has also been explored, although no complete solution has been provided.

It is an aim of an embodiment of embodiments of the invention to overcome or at least partially mitigate one or more problems associated with the prior art.

### BRIEF SUMMARY

In an aspect of the invention there is provided a control system for controlling operation of an agricultural vehicle-implement combination, the control system comprising one or more controllers, and being configured to: receive data indicative of an orientation of the vehicle, the implement and/or the vehicle-implement combination; determine, in dependence on the received data, an adjustment in a lateral position of the implement; and generate and output a control signal for controlling an actuator mechanism for controlling the lateral position of the implement in accordance with the determined adjustment.

Advantageously, the present invention accounts for an orientation of the vehicle, implement and/or vehicle-implement combination and adjusts a lateral position of the implement accordingly to increase efficiency of the operation, e.g. by reducing overlap of working areas of two or more implements, and/or reducing or minimizing any regions which are missed by the arrangement during operation, e.g. which would otherwise leave an unworked (e.g. non-mowed) area of the environment.

The one or more controllers may collectively comprise an input (e.g. an electronic input) for receiving one or more input signals indicative of the data. The one or more controllers may collectively comprise one or more processors (e.g. electronic processors) operable to execute computer readable instructions for controlling operation of the control system, for example to determine the orientation of the vehicle, the implement and/or the vehicle-implement combination, and/or to determine the position adjustment for the implement. The one or more processors may be operable to generate one or more control signals for controlling one or more systems of the vehicle or the implement, e.g. to control operation of the actuator mechanism. The one or more controllers may collectively comprise an output (e.g. an electronic output) for outputting the one or more control signals.

The orientation may comprise a direction of travel of the vehicle or vehicle-implement combination. This may include a direction of travel with respect to a working environment for the vehicle-implement combination, such as a field.

The orientation may comprise a turning angle of the vehicle-implement combination. In this way, the control system may be configured to determine a change, or rate of change, in the orientation of the vehicle-implement combination, e.g. as the combination makes a turn in the environment. This may include or be determined from a steering angle of the vehicle. For example, in embodiments the control system may be configured to receive data from a control network, e.g. an ISOBUS based network, of the vehicle indicative of a steering angle of the vehicle, which could include an angle of a steering wheel, an angle of one or more steerable wheels of the vehicle, or, for example, for a tracked vehicle a turning angle provided by the operation of one or more tracks.

The orientation may comprise an angle of the vehicle, implement and/or vehicle-implement combination with respect to a horizontal axis. This can include a pitch or tilt of the vehicle, implement and/or vehicle implement combination. The control system may be configured to receive sensor data from a position sensor provided as part of or mounted/connected to the vehicle or to the implement; and to determine the adjustment for the lateral position of the implement in dependence on the orientation as determined from the received sensor data.

Advantageously, accounting for the pitch or tilt of the vehicle or combination may account for the scenario where the rear axle of the combination "drifts" down the slope under its weight causing the combination to travel in effect at an angle to the slope, causing the same issues discussed herein in terms of overworking or not working an area of the environment.

The control system may be configured to receive location data from a positioning system indicative of the position of the vehicle-implement combination within an environment. The environment may comprise a mapped environment comprising data indicative of the terrain type, slope, and the like at each of a plurality of positions within the environment. The control system may be configured to determine the orientation of the vehicle, implement and/or vehicle-implement combination in dependence on the location data and the mapped environment. For example, the control system may be configured to determine a location of the vehicle-implement combination from the received location data, retrieve one or more characteristics of the determined location from the mapped environment, and determine the orientation of the vehicle, implement and/or vehicle-implement combination in dependence thereon.

The positioning system may comprise a navigation system, such as a Global Navigation Satellite System (GNSS), such as GPS, GLONASS, or the like. Additionally or alternatively, the positioning system may comprise a local positioning capability, for example one configured to determine the location of the vehicle-implement combination within an environment in dependence on a position of the vehicle or implement with respect to a local base station positioned within or proximal to the environment. The local positioning may be used alone or in conjunction with the GNSS system, for example to provide a localized correction to position data obtain by the GNSS.

Advantageously, the control system may be able to pre-emptively determine an upcoming change in the orientation of the vehicle-implement combination and allow for the position of the implement to be adjusted ahead of time further increasing the efficiency of the operation when compared with a purely reactive system.

The control system may be configured to determine the adjustment for the lateral position of the implement in dependence on a magnitude of the difference between the determined orientation and a control orientation. The control system may be configured to determine the adjustment proportional to the magnitude of the difference between the determined orientation and the control orientation - e.g. for larger differences between the determined orientation and the control orientation, a greater lateral adjustment may be determined.

Where the orientation comprises a direction of travel of the vehicle or vehicle-implement combination, the control orientation may comprise a direction which is substantially parallel to a field boundary or the like, which may be indicative of an orientation of an expected wayline for the vehicle-implement combination within the environment.

Where the orientation comprises a turning angle of the vehicle-implement combination the control orientation may comprise a direction substantially parallel to a longitudinal axis of the vehicle or vehicle implement combination, that is straight ahead of the vehicle were the vehicle not making a turn.

Where the orientation comprises an angle of the vehicle, implement and/or vehicle-implement combination with respect to a horizontal axis, the control orientation may be substantially parallel to that horizontal axis.

The actuator mechanism may comprise a hydraulic or pneumatic actuator system operable to extend or retract a cylinder or the like to control the lateral position of the implement. The actuator mechanism may additionally include a state sensor for providing information back to the control system indicative of the current lateral position of the implement.

The control system may be configured to control a lifting function of the implement. This may include lifting the implement vertically upon request by an operator of the vehicle-implement combination, e.g. when performing a headland turn. In further embodiments, the control system may be configured to automate the lifting function, for example, in dependence on data received from a location system (GNSS or local, for example), e.g. where the location of the combination is determined to be at or proximal to a headland of the environment. The control system may be operable to "centre" the implement as part of the lifting function. "Centering" the implement may comprise adjusting the lateral position of the implement with respect to the vehicle such that it is located substantially centrally with respect to a longitudinal axis of the vehicle. This may ensure the implement is lifted evenly - that is with both ends of the implement being raised together at the same time.

The control system may be configured to receive operational data indicative of an operational state of the vehicle and/or implement. The operational data may be indicative of an operational state of one or more components of the vehicle or implement. The operational data may be indicative of an operational state of a power take off (PTO) shaft of the vehicle. The operational state may relate to the forward movement of the vehicle. The control system may be configured to enable or disable the adjustment of the lateral position of the implement in dependence on the operational data. The control system may, for example, be configured to prevent any lateral adjustment of the implement where the PTO is disabled and/or where the vehicle is not moving in a forwards direction, e.g. over a threshold speed value. Advantageously, this may prevent inadvertent movement of the implement during maintenance of the vehicle or implement, and/or during mounting / unloading of the implement.

The control system may be configured to receive a user input indicative of a user request for a level of adjustment to be provided to the position of the implement by the control system. This may include a user input of one of a plurality of levels of adjustment. This could include a "no" adjustment level whereby the control system may be operable to suggest an adjustment to the user but not take any corrective action, and/or one or more of a low, medium and/or high adjustment level, corresponding to increasing levels of adjustment. This may correspond to the distance and/or speed of adjustment performed by the control system.

The vehicle may comprise any agricultural vehicle or machine comprising or having the capability of having one or more implements mounted or otherwise coupled thereto. The vehicle may comprise a tractor having front and rear hitches for mounting implements thereto.

The implement may comprise a mowing unit. In embodiments, the implement comprises a front mowing unit mountable or otherwise coupleable to the front of the vehicle, e.g. on a front hitch of a tractor.

The vehicle-implement combination may form a butterfly mower arrangement with a front mowing unit mounted or otherwise coupled at the front hitch of the vehicle and a pair of rear mowing units mounted or otherwise coupled to the rear of the vehicle and positioned laterally either side of the vehicle. In such an arrangement, the rear mowing units may be fixed in terms of their lateral position with respect to the vehicle, with the front mowing unit comprising the implement which is moveable in the manner and under the conditions described herein.

A further aspect of the invention provides a system for controlling operation of an agricultural vehicle-implement combination, comprising the control system of the preceding aspect of the invention; and an actuator mechanism for controlling the lateral position of the implement in dependence on the orientation of the vehicle, implement or vehicle-implement orientation as determined by the control system.

The system may additionally include one or more sensing units operable to measure one or more measureable parameters indicative of an orientation of the vehicle, the implement and/or the vehicle-implement combination.

A further aspect of the invention provides an agricultural vehicle comprising the control system and/or system of any of the preceding aspects.

The vehicle may comprise a tractor. The vehicle may include one or more hitches, e.g. a front hitch and/or rear hitch for mounting the implement thereto.

A further aspect provides a vehicle-implement combination comprising the control system or system described hereinabove.

According to a further aspect of the invention, there is a provided a method of controlling operation of an agricultural vehicle-implement combination, the method comprising: receiving data indicative of an orientation of the vehicle, the implement and/or the vehicle-implement combination; determining, in dependence on the received data, an adjustment in a lateral position of the implement; and controlling an actuator mechanism for controlling the lateral position of the implement in accordance with the determined adjustment.

The orientation may comprise a direction of travel of the vehicle or vehicle-implement combination. This may include a direction of travel with respect to a working environment for the vehicle-implement combination, such as a field.

The orientation may comprise a turning angle of the vehicle-implement combination. In this way, method may include determining a change, or rate of change, in the orientation of the vehicle-implement combination, e.g. as the combination makes a turn in the environment. This may include or be determined from a steering angle of the vehicle. For example, in embodiments method may include receiving or retrieving data from a control network, e.g. an ISOBUS based network, of the vehicle indicative of a steering angle of the vehicle, which could include an angle of a steering wheel, an angle of one or more steerable wheels of the vehicle, or, for example, for a tracked vehicle a turning angle provided by the operation of one or more tracks.

The orientation may comprise an angle of the vehicle, implement and/or vehicle-implement combination with respect to a horizontal axis. This can include a pitch or tilt of the vehicle, implement and/or vehicle implement combination. The method may use sensor data from a position sensor provided as part of or mounted/connected to the vehicle or to the implement to determine the adjustment for the lateral position of the implement in dependence on the orientation (as determined from the sensor data).

The method may include determining the position of the vehicle-implement combination within an environment. The environment may comprise a mapped environment comprising data indicative of the terrain type, slope, and the like at each of a plurality of positions within the environment. The method may include determining the orientation of the vehicle, implement and/or vehicle-implement combination in dependence on the location of the vehicle or implement within the mapped environment. For example, the control system may be configured to determine a location of the vehicle-implement combination, retrieve one or more characteristics of the determined location from the mapped environment, and determine the orientation of the vehicle, implement and/or vehicle-implement combination in dependence thereon.

Advantageously, the method may be able to pre-emptively determine an upcoming change in the orientation of the vehicle-implement combination and allow for the position of the implement to be adjusted ahead of time further increasing the efficiency of the operation when compared with a purely reactive method.

The method may include determining the adjustment for the lateral position of the implement in dependence on a magnitude of the difference between the determined orientation and a control orientation. The method may include determining the adjustment proportional to the magnitude of the difference between the determined orientation and the control orientation - e.g. for larger differences between the determined orientation and the control orientation, a greater lateral adjustment may be determined.

The control orientation may be as described hereinabove with reference to the first mentioned aspect of the invention.

The method may additionally include controlling a lifting function of the implement. This may include lifting the implement vertically upon request by an operator of the vehicle-implement combination, e.g. when performing a headland turn. In further embodiments, the method may include automating the lifting function, for example, in dependence on data received from a location system (GNSS or local, for example), e.g. where the location of the combination is determined to be at or proximal to a headland of the environment. The method may include centering the implement as part of the lifting function.

The method may include receiving or retrieving operational data indicative of an operational state of the vehicle and/or implement. The operational data may be indicative of an operational state of one or more components of the vehicle or implement. The operational data may be indicative of an operational state of a power take off (PTO) shaft of the vehicle. The operational state may relate to the forward movement of the vehicle. The method may include enabling or disabling the adjustment of the lateral position of the implement in dependence on the operational data. The method may, for example, include preventing any lateral adjustment of the implement where the PTO is disabled and/or where the vehicle is not moving in a forwards direction, e.g. over a threshold speed value. Advantageously, this may prevent inadvertent movement of the implement during maintenance of the vehicle or implement, and/or during mounting / unloading of the implement.

The method may include receiving a user input indicative of a user request for a level of adjustment to be provided to the position of the implement by the control system. This may include a user input of one of a plurality of levels of adjustment. This could include a "no" adjustment level whereby the method may include suggesting an adjustment to the user but not take any corrective action, and/or one or more of a low, medium and/or high adjustment level, corresponding to increasing levels of adjustment. This may correspond to the distance and/or speed of adjustment.

A further aspect provides computer software comprising one or more computer readable instructions which, when executed by one or more processors, causes performance of the method of the preceding aspect of the invention.

A further aspect provides a non-transitory computer readable medium comprising the computer software of the preceding aspect of the invention.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
FIG. 1 is a top down schematic view illustrating a vehicle-implement combination embodying aspects of the present disclosure;
FIG. 2 is a further top down schematic view of the vehicle-implement combination shown in FIG. 1;
FIG. 3 is a schematic view of an embodiment of a control system; and
FIGs 4A-5B are a series of schematic top down views illustrating various operational uses of aspects of the present disclosure.

### DETAILED DESCRIPTION

The Figures illustrate embodiments of a control system 100 and vehicle-implement combination 2 controllable under operation of the control system 100 in the manner described herein.

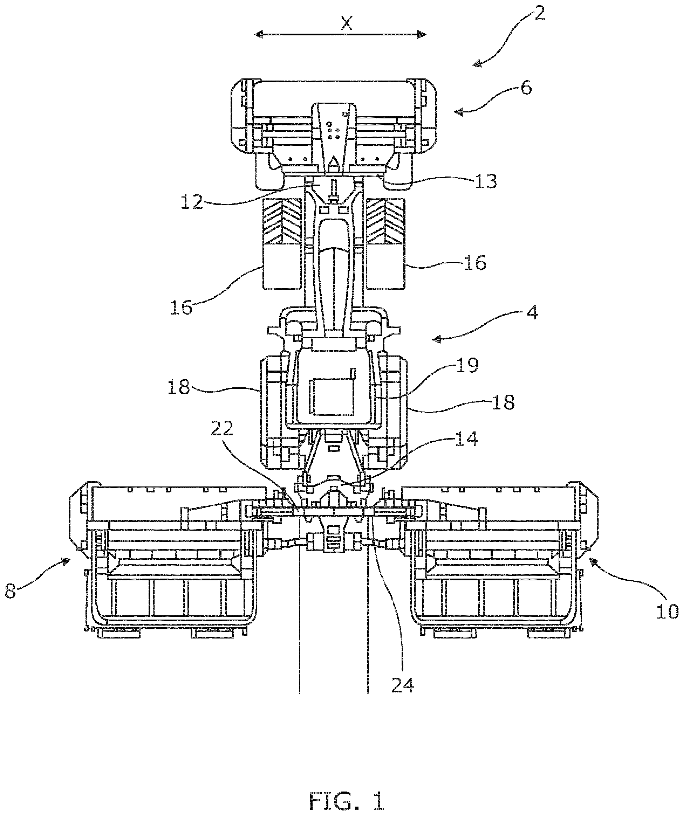

FIG. 1 is a schematic top down view of a vehicle-implement combination 2 formed of a vehicle in the form of a tractor 4, and an implement in the form of a front mowing unit 6. In the illustrated embodiment, tractor 4 comprises front and rear wheels 16, 18, any or all of which may be steerable as will be appreciated, along with an operator cab 19.

The combination 2 forms a "butterfly-mower" arrangement which additionally includes first and second rear mowing units 8, 10. The front mowing unit 6 is operably coupled at a front hitch 12 of the tractor 4 and is moveable (in the manner described hereinbelow) under the operation of an actuator mechanism 13. The first and second rear mowing units 8, 10 are operably coupled to a rear hitch 14 of the tractor 4 by respective mounting mechanisms 22, 24. As will be appreciated, the mounting mechanisms 22, 24 may be configured to allow the rear mowing units 8, 10 to be folded between operating (e.g. as shown in FIG 1) and a storage position - e.g. folded upwardly and inwards for transport and/or storage of the combination 2. As shown in FIG 1, in an operating positon, first and second rear mowing units 8, 10 are positioned such that they are laterally spaced either side of a longitudinal axis of the tractor 4.

The invention is not limited in terms of the design and configuration of the front mowing unit 6, and rear mowing units 8, 10 in themselves. The skilled person will appreciate that a number of different mowing unit setups are possible and appropriate, including a variety of different cutting mechanisms and the like.

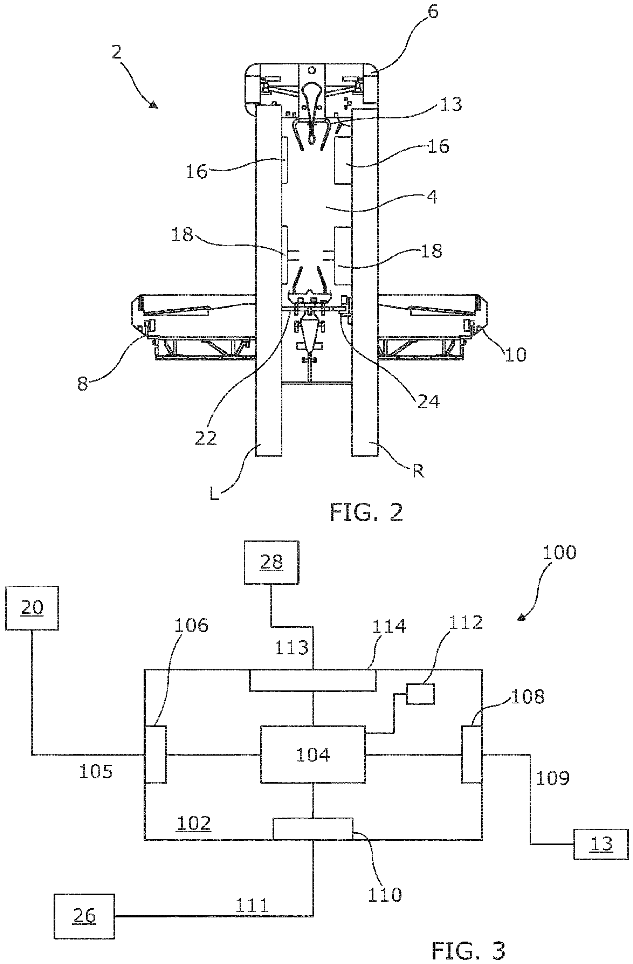

FIG 2 is a further schematic top down view of the vehicle implement combination 2 of FIG 1.

Each of the front and rear mowing units 6, 8, 10 have respective working areas corresponding substantially to the width of the mowing units with respect to a lateral axis of the combination 2 (i.e. in the direction of axis "X" of FIG 1). When used herein and throughout the specification, the term "working area" is intended to cover the area over which the respective mowing unit interacts with (and cuts) the crop / material in operation. In effect, the working area for each mowing unit 6, 8, 10 will define a strip of cut / mown land as the combination 2 traverses the working environment.

FIG 2 illustrates two separate regions L, R where the working area of the front mowing unit 6 overlaps with the working areas of the first and second rear mowing units 8, 10. Specifically, a region L on the left hand side of the tractor 4 (when viewed from the perspective of FIG 2) corresponding to the overlap between the front mowing unit 6 and the first rear mowing unit 8, and a region R on the right hand side of the tractor 4 (again, when viewed from the perspective of FIG 2) corresponding to the overlap between the front mowing unit 6 and the second rear mowing unit 10. As discussed herein, in order to maximize efficiency of the mowing operation, these overlaps should be kept to a minimum as such overlaps effectively reduce the area of uncut material encountering the rear mowing units 8, 10. However, and as discussed herein, optimizing the setup by removing any overlap results in further issues where the vehicle-implement combination 2 is travelling in any direction other than directly ahead (as shown in FIG 2).

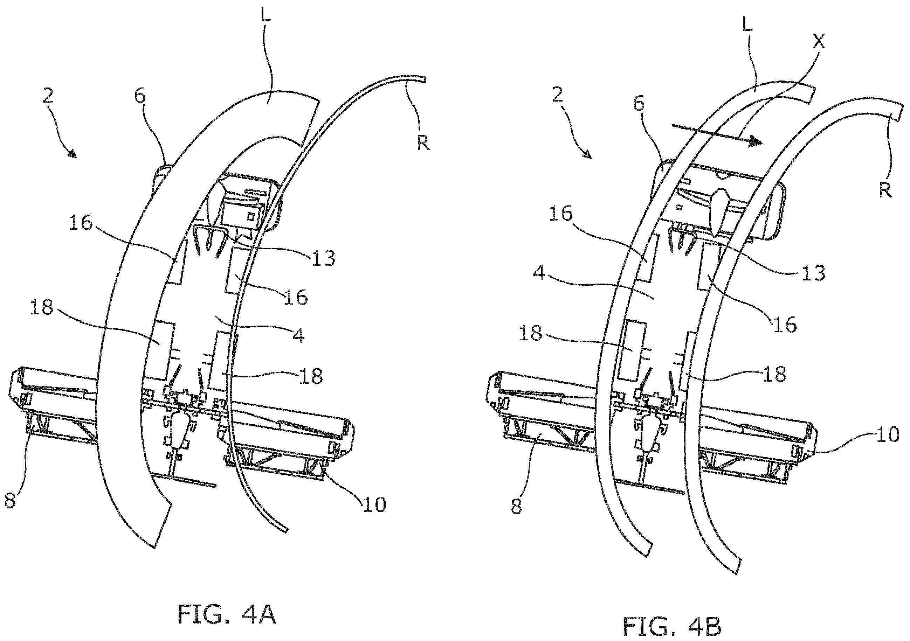

FIGS 4A - 5B illustrate the operational use of the present invention in overcoming such issues. Specifically, these FIGs illustrate how the present invention utilises an orientation (either an absolute measurement of the real time orientation or a change in orientation, e.g. upon turning) of the tractor 4, or combination 2 as a whole, to determine an adjustment to be made to the lateral position of the front mowing unit 6.

In FIG 4A, the vehicle-implement combination 2 is shown performing a turn, here to the right from the perspective of FIG 4A. As shown, with increasing turn angle, the width of the overlap region L on the outside of the turn, here on the left hand side, increases. As discussed herein, an increase in the overlap between the front mowing unit 6 and either rear mowing unit 8, 10 is detrimental to the efficiency of the operation as a whole. Furthermore, and again as shown in FIG 4A, with increasing turn angle the width of the overlap region R on the inside of the turn decrease. Up to a point this can be advantageous, however at large enough steering angles a gap is created (in a lateral direction) between the working area of the front mowing unit 6 and the respective rear mowing unit 8, 10. This results in a strip of land being left uncut / unmowed as the tractor 4 traverses the working environment.

FIG 4B illustrates operation of the present invention. Here, and as discussed in detail herein, data indicative of an orientation, here the steering angle, of the tractor 4 is obtained and used to determine an adjustment in the lateral position of the front mowing unit 6. The data is obtained from a suitable sensor configured to measure an angle of a steering wheel, or indeed one or more steerable wheels 16, 18 of the tractor 4. This adjustment is then applied by controlling the actuator mechanism 13 to cause a shift in the lateral position of the front mowing unit 6 by the determined adjustment. In the illustrated embodiment, with the combination 2 determined to be making a turn to the right (from the perspective of FIG 4B), an adjustment is determined and applied which causes a shift in the position of the front mowing unit 6 inwardly, with respect to the direction of the turn, in the direction X. In doing so, the extent to which the working areas of the front mowing unit 6 and rear mowing unit 8 overlap is reduced (compared with FIG 4A). Whilst the extent to which the working areas of the front mowing unit 6 and rear mowing unit 10 overlaps is increased (compared with FIG 4A), having the size of the overlap regions L, R roughly uniform is preferable to the scenario in FIG 4A and also prevents the instance discussed above where there might be strips of land missed at higher steering angles.

The magnitude of the adjustment in the lateral position is determined in dependence on the magnitude of the steering angle when compared with a "control orientation", here being straight ahead.

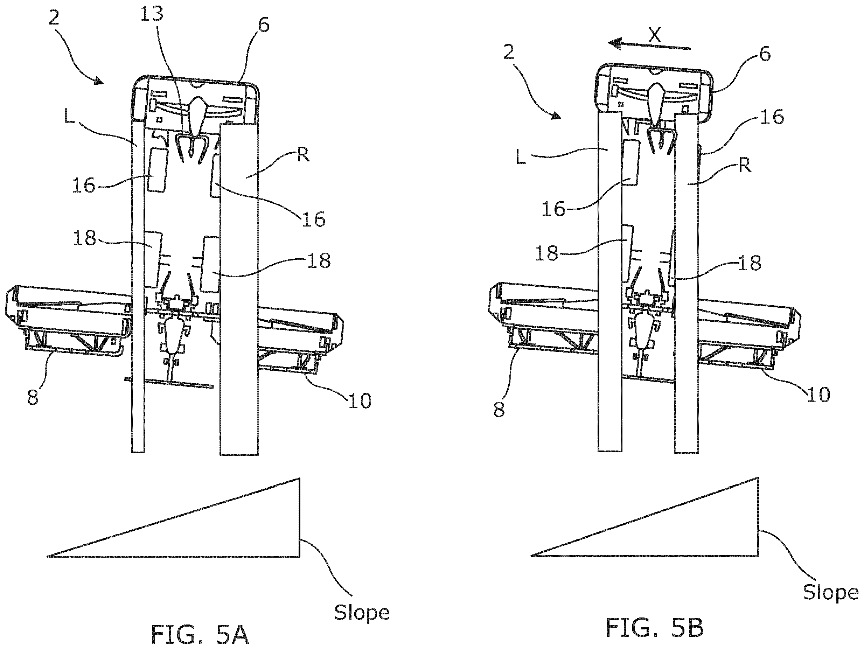

In FIG 5A, the vehicle-implement combination 2 is shown travelling along a slope, illustrated graphically in the FIGs. As shown, due to the slope, the rear axle of the tractor 4, primarily under the weight of the axle plus rear mowing units 8, 10 etc. is caused to slip down the slope. This results in the combination 2 pointing at an angle with respect to the slope and indeed to its direction of travel (here roughly perpendicular to the direction of the slope) which in turn affects the overlap between the front and rear mowing units 6, 8, 10 in the manner shown. Specifically, in the illustrated embodiment, the width of the overlap region R, corresponding to the side of the combination 2 higher up the slope, increases. Again, as discussed herein, an increase in the overlap between the front mowing unit 6 and either rear mowing unit 8, 10 is detrimental to the efficiency of the operation as a whole. Furthermore, and again as shown in FIG 5A, with increasing slope the width of the overlap region L corresponding to the side of the combination 2 down the slope decreases. As with turning angle, up to a point this can be advantageous, however at large enough slopes a gap again is created (in a lateral direction) between the working area of the front mowing unit 6 and the respective rear mowing unit 8, 10. Again, this results in a strip of land being left uncut / unmowed as the tractor 4 traverses the working environment.

FIG 5B illustrates a further operation of the present invention. Here, and as discussed in detail herein, data indicative of an orientation, here the inclination (pitch / tilt), of the tractor 4 and/or mowing unit 6, 8, 10 is obtained and used to determine an adjustment in the lateral position of the front mowing unit 6. The data is obtained from a suitable sensor configured to measure the inclination, and could include an accelerometer, gyroscope or the like. This adjustment is then applied by controlling the actuator mechanism 13 to cause a shift in the lateral position of the front mowing unit 6 by the determined adjustment. In the illustrated embodiment, with the combination 2 determined to be tilted to the left (from the perspective of FIG 5B), an adjustment is determined and applied which causes a shift in the position of the front mowing unit 6 downwards, with respect to the slope, in the direction X. In doing so, the extent to which the working areas of the front mowing unit 6 and rear mowing unit 10 overlap is reduced (compared with FIG 5A). Whilst the extent to which the working areas of the front mowing unit 6 and rear mowing unit 8 overlaps is increased (compared with FIG 5A). Again this results in the width of the overlap regions L, R being roughly uniform and prevents the instance where there might be strips of land missed at larger inclinations.

The magnitude of the adjustment in the lateral position is determined in dependence on the magnitude of the inclination when compared with a "control orientation", here being a horizontal axis.

In a variant of the invention, the arrangement may be configured to determine the orientation of the tractor 4, or combination 2 as a whole, utilising a positioning module (e.g. a GPS unit or the like) and a mapped environment. Utilising terrain data, e.g. of slope and terrain type etc. a position and orientation of the tractor 4 / combination 2 may be determined and an appropriate adjustment made to the position of the front mowing unit 6 without requiring real time monitoring of the steering angle or inclination of the tractor 4, for example. Utilising such data from the positioning module, the arrangement can be configured to be proactive rather than reactive, and adjust the lateral position of the front mowing unit 6 ahead of time to further increase efficiency.

FIG 3 illustrates the control system 100. As shown, control system 100 comprises a controller 102 having an electronic processor 104, electronic inputs 106, 110, 113 and an electronic output 108. The processor 104 is operable to access a memory 112 of the controller 102 and execute instructions stored therein to perform the steps and functionality of the present invention discussed herein, e.g. by determining and applying the adjustment in the lateral position of the front mowing unit 6.

The processor 104 is operable to receive sensor data via input 106 which, in the illustrated embodiment, takes the form of input signals 105 received from a sensor 20 associated with the steering system of tractor 4, and in particular steerable front wheels 16 of the tractor 4. Utilising this data, the processor 104 is configured to analyse the data and determine therefrom a measure of the steering angle (magnitude and direction) of the tractor 4. As discussed above, the determined steering angle it utilised, here by the processor 104, to determine an adjustment to be made to the lateral position of the front mowing unit 6. This may include retrieving information from a look up table stored in memory 112 detailing adjustments to be made for any given observed steering angle.

In the illustrated embodiment, the processor 104 is further operable to receive sensor data in the form of input signals 111 via input 110 from an inclination sensor 26 (e.g. an accelerometer, gyroscope or the like) operably coupled to the tractor 4 and configured to measure an inclination of the tractor 4 with respect to a horizontal axis, e.g. a magnitude and direction of a tilt or pitch of the tractor 4. The processor 104 is configured to determine the inclination of the tractor 4 from the data received from sensor 26 and use this to determine an adjustment to be made to the lateral position of the front mowing unit 6. Again, this may include retrieving information from a look up table stored in memory 112 detailing adjustments to be made for any given inclination. It will be appreciated that the sensor 20 and second 26 can be utilised in combination or separately, and the invention is not limited in that sense.

Output 108 is operably coupled to the actuator mechanism 13. The control system 100 is operable to control operation of actuator mechanism 13, in the illustrated embodiment through output of control signals 109 via output 108 for receipt at the actuator mechanism (e.g. at a local control unit thereof) for controlling operation of the mechanism 13 for adjusting the position of the front mowing unit 6 in accordance with the determined adjustment.

FIG 3 additionally illustrates a further feature of embodiments of the control system 100, and a variant of the present invention. Specifically, controller 102 includes an electronic input 114 configured to receive positional data, here in the form of input signals 113 from a positioning module 28. The processor 104 is configured to determine based on the data received from the positioning module 28 a location of the combination 2 within a mapped environment. The mapped environment may include data relating to the terrain type, slope etc. at various locations within the corresponding real world environment, and may be stored in a memory accessible to the processor 104, e.g. memory 112. In this way, the processor 104 may be configured to determine the orientation of the tractor 4 directly from the tractors position, or indeed an upcoming change in the orientation of the tractor based on its direction of travel and positon within the mapped environment. This may enable the processor 104 to initiate a movement in the position of the front mowing unit 6 in a proactive manner.

In an extension of the illustrated embodiments, control system 100 may be further configured to control a lifting function of the front mowing unit 6. This may include lifting the front mowing unit 6 vertically upon request by an operator of the tractor 4, e.g. when performing a headland turn. In an alternative, the control system 100 may be configured to automate the lifting function, for example, in dependence on data received from the positioning module 28 e.g. where the location of the combination is determined by the processor 104 to be at or proximal to a headland within the working environment. The control system 100 may be operable to centre the front mowing unit 6 as part of the lifting function.

In a further extension, the control system 100 may be configured to receive operational data indicative of an operational state of the tractor 4, front mowing unit 6 or first and/or second rear mowing units 8, 10. Utilising this information, the control system 100 may enable or disable the adjustment of the lateral position of the front mowing unit 6. The control system 100 may, for example, be configured to prevent any lateral adjustment of the front mowing unit 6 where a PTO of the tractor 4 is disabled and/or where the tractor 4 is not moving in a forwards direction, e.g. over a threshold speed value.

All references cited herein are incorporated herein in their entireties. If there is a conflict between definitions herein and in an incorporated reference, the definition herein shall control.

## Claims

1. A control system for controlling operation of an agricultural vehicle-implement combination, the control system comprising one or more controllers, and being configured to:
receive data indicative of an orientation of the vehicle, the implement and/or the vehicle-implement combination; determine, in dependence on the received data, an adjustment in a lateral position of the implement; and
generate and output a control signal for controlling an actuator mechanism for controlling the lateral position of the implement in accordance with the determined adjustment.

2. A control system as claimed in claim 1, wherein the orientation comprises:
a direction of travel of the vehicle or vehicle-implement combination;
a turning angle of the vehicle-implement combination; and/or
a pitch or tilt of the vehicle, implement and/or vehicle implement combination.

3. A control system as claimed in claim 1 or claim 2, configured to receive location data from a positioning system indicative of the position of the vehicle-implement combination within an environment; and wherein the environment comprises a mapped environment comprising data indicative of the terrain type and/or slope at each of a plurality of positions within the environment.

4. A control system as claimed in claim 3, configured to determine the orientation of the vehicle, implement and/or vehicle-implement combination in dependence on the location data and the mapped environment.

5. A control system as claimed in any preceding claim, configured to determine the adjustment for the lateral position of the implement proportional to the magnitude of the difference between the determined orientation and the control orientation

6. A control system as claimed in claim 5, wherein:
where the orientation comprises a direction of travel of the vehicle or vehicle-implement combination, the control orientation comprises a direction which is substantially parallel to a field boundary or the like;
where the orientation comprises a turning angle of the vehicle-implement combination the control orientation comprises a direction substantially parallel to a longitudinal axis of the vehicle or vehicle implement combination; and/or
where the orientation comprises an angle of the vehicle, implement and/or vehicle-implement combination with respect to a horizontal axis, the control orientation is substantially parallel to that horizontal axis.

7. A control system of any preceding claim, configured to control a lifting function of the implement; optionally wherein the lifting function includes lifting the implement vertically upon request by an operator of the vehicle-implement combination.

8. A control system as claimed in claim 7, configured to automate the lifting function in dependence on data received from a location system.

9. A control system of claim 7 or claim 8, operable to centre the implement as part of the lifting function.

10. A control system of any preceding claim, configured to:
receive operational data indicative of an operational state of the vehicle and/or implement; and
enable or disable the adjustment of the lateral position of the implement in dependence on the operational data.

11. A control system of any preceding claim, wherein the implement comprises a front mowing unit mountable or otherwise coupleable to the front of the vehicle.

12. A control system of any preceding claim, wherein the vehicle-implement combination forms a butterfly mower arrangement with a front mowing unit mounted or otherwise coupled at the front hitch of the vehicle and a pair of rear mowing units mounted or otherwise coupled to the rear of the vehicle and positioned laterally either side of the vehicle.

13. A system for controlling operation of an agricultural vehicle-implement combination, comprising the control system of any preceding claim; and an actuator mechanism for controlling the lateral position of the implement in dependence on the orientation of the vehicle, implement or vehicle-implement orientation as determined by the control system.

14. An agricultural vehicle comprising the control system of any of claims 1 to 12, and/or the system of claim 13.

15. A method of controlling operation of an agricultural vehicle-implement combination, the method comprising:
receiving data indicative of an orientation of the vehicle, the implement and/or the vehicle-implement combination;
determining, in dependence on the received data, an adjustment in a lateral position of the implement; and
controlling an actuator mechanism for controlling the lateral position of the implement in accordance with the determined adjustment.
